# EUROPÄISCHE PATENTSCHRIFT

(11) **EP 0 593 886 B1**
(45) Veröffentlichungstag und Bekanntmachung des Hinweises auf die Patenterteilung: **10.04.1996**
(21) Anmeldenummer: 93114135.2
(22) Anmeldetag: 03.09.1993
(51) Int. Cl.: B29C 55/16

(54) **Vorrichtung zum simultanen biaxialen Recken und axialen Schrumpfen thermoplastischer Folienbahnen**
Apparatus for simultaneous biaxial stretching and axial shrinking of thermoplastic films
Appareil pour l'étirage biaxial simultané et le retrait axial de feuilles thermoplastiques

(30) Priorität: 22.10.1992 DE 4235648
(43) Veröffentlichungstag der Anmeldung: 27.04.1994
(73) Patentinhaber: LINDAUER DORNIER GESELLSCHAFT M.B.H, D-88129 Lindau (DE)
(72) Erfinder: Rutz, Andreas, Dr.-Ing., D-88131 Lindau (DE)

(56) Entgegenhaltungen:
- EP-A- 0 122 787
- EP-A- 0 523 430
- US-A- 3 932 919
- DATABASE WPI Week 7406, Derwent Publications Ltd., London, GB; AN 74-10790V & SU-A-330 036 (KONSTANTINOV V. N. ET AL.) 24. April 1973

## Beschreibung

Die Erfindung betrifft eine Vorrichtung zum simultanen biaxialen Recken und axialen Schrumpfen thermoplastischer Folienbahnen, mit an beiden Rändern der Folienbahn angreifenden Klemmteilen der aus Klemm- und Rollteil bestehenden Spannkluppenkörper, die in Führungsbahnen mittels Rollenführung geführt werden, und die Führungsbahnen nacheinander von einer Einlaßzone über Behandlungszonen zu einer Auslaßzone zueinander parallel, voneinander divergierend und im wesentlichen wieder parallel zueinander verlaufend angeordnet sind, mit endlos umlaufenden, die bahngeführten Kluppenkörper mitnehmenden Zugorganen, die mit einer Umlenkung im Einlauf und mit einem Antriebsrad im Auslauf jeder Führungsbahn in Eingriff stehen.

Bekannt ist aus der DE-AS 16 29 562, daß an jeder Seite einer Folienbahn je zwei endlos umlaufende Gelenkförderer (Zugorgane) mit aufeinander folgend angeordneten Spannkluppen vorgesehen sind. Hierbei sind jeweils die Spannkluppen durch Lenker untereinander verbunden, die in zickzackförmiger Anordnung längs zweier Führungsbahnen in der Reck- und Fixierzone geführt sind. Die beiden Führungsbahnen sind in Längsrichtung in der Reckzone mit zunehmend geringer werdendem Abstand und in der Fixierzone mit zunehmend größer
werdendem Abstand zueinander angeordnet. Nachteilig und damit technisch aufwendig ist hierbei, daß eine Änderung des Längsreckverhältnisses oder des Längsschrumpfverhältnisses nur über eine relative Lageveränderung der beiden einander zugeordneten Führungsbahnen zueinander möglich ist.

Des weiteren ist aus der US-PS 3,150,433 eine Folienreckmaschine bekannt, in welcher die beiden Ränder einer Folienbahn von Spannkluppen, die in endlos umlaufenden Bahnen transportiert werden, erfaßt sind. Dabei sind die Spannkluppen nicht zu einer Kette zusammengefaßt, sondern werden einzeln transportiert und greifen in einen sich in Transportrichtung verbreiternden Feld mit einem Zapfen in eine Gewindenut einer rotierenden Welle ein. Durch Rotation der links bzw. rechts der Folienbahn angeordneten Wellen werden die Spannkluppen in Längsrichtung transportiert. Außerdem sind die Wellen so ausgebildet, daß die Steigung der Gewindenuten in Transportrichtung zunimmt. Dadurch wird während des Transportes der relative Längsabstand zwischen den Kluppen vergrößert und eine Längsreckung der Folie erreicht. Nachteilig bei dieser Anordnung ist, daß das Reckverhältnis für die Längsreckung festliegt und nicht verändert werden kann. Außerdem sind die Wellen sehr bearbeitungsaufwendig und nur für eine begrenzte gerade Strecke in der Vorlaufbahn der Kluppen einsetzbar. Eine Möglichkeit zur Längsschrumpfung der Folie ist in dieser Druckschrift nicht aufgezeigt.

Ferner ist aus der DE-PS 32 07 384 eine biaxiale Reckvorrichtung bekannt. Hier sind die einzelnen Spannkluppen nicht mehr durch besondere auf- und abspulbare Mittel miteinander verbunden, sondern die Spannkluppen werden von einem endlos umlaufenden Zugorgan getragen und von ihm transportiert. Am Kluppenkörper selbst sind Zahnräder vorgesehen, die in Eingriff mit dem Zugorgan stehen und bei ihrem Verdrehen ein Verschieben der Kluppe entlang des Zugorgans bewirken. Die Zahnräder werden durch der Spannkluppe jeweils zugeordnete und von außen beeinflußbare Antriebseinrichtungen, z.B. durch elektrische Motoren oder durch Getriebe angetrieben. Der gegenseitige Abstand der Spannkluppen auf dem Zugorgan ist also von einem unabhängigen und außerhalb des Zuorganes angeordneten Steuermittel einstellbar. Bei dieser Anordnung werden die Längskräfte nur anteilmäßig auf jede einzelne Spannkluppe übertragen, während die Hauptkräfte über das Zugorgan eingeleitet werden. Das Zugorgan ist in sich nicht dehnbar und kann daher ohne Schwierigkeiten für die in Folge der Längskräfte auftretende Belastung ausgelegt werden. Diese bekannte Vorrichtung gestattet ein simultanes biaxiales Recken mit in weiten Grenzen regelbaren Reck- bzw. Schrumpfverhältnissen, die entlang der Behandlungsstrecke sogar indiviuell unterschiedliche Werte aufweisen können. Diese bekannte Spannkluppe besitzt eine Rollenführung und erlaubt daher hohe Laufgeschwindigkeiten bei ruhigem und stoßarmen Lauf, erfordert aber einen nicht unbeträchtlichen Aufwand an Steuerungsteilen, Getrieben, Motoren u.s.w., deren Anbau an den Spannkluppen und entlang der Führungsbahn oft nicht einfach zu bewerkstelligen ist, zumal diese beweglichen Teile in der heißen Umgebung der Behandlungszonen innerhalb des Gehäuses der Reckanlage wirksam sein müssen. Die für die Vorrichtung benötigten und entlang der Führungsbahn angeordneten, mit unterschiedlichen Geschwindigkeiten umlaufenden Steuerketten sind für Ihre Wartung nur sehr schwer zugänglich. Bei der Behandlung von Folienbahnen spielt aber, wie schon erwähnt, nicht nur die Reckung eine Rolle, sondern auch der während des Fixiervorganges auftretenden Schrumpfung kommt Bedeutung zu. Die Abstände zwischen den umlaufenden Spannkluppen müssen bei der Schrumpfung der Folienbahn möglichst genau dem gewünschten Schrumpfmaß angepaßt werden.

Bekannt ist schließlich aus der EP-Patentanmeldung 0 291 775 eine Vorrichtung zur simultanen biaxialen Behandlung von Folienbahnen. An den beiden Rändern der Folienbahn greifen jeweils in Führungsbahnen endlos umlaufende und mit Klemmteilen zum Einspannen der Ränder der Folienbahn versehenen Spannkluppen mit Rollenlagerungen an. Der Abstand zwischen den einzelnen Spannkluppen ist von außen durch Steuerteile beinflußbar.

Das erfindungsgemäße Merkmal besteht dabei darin, daß die Spannkluppen durch Kettenstränge untereinander verbunden sind, wobei die Gelenkstellen eines ersten Kettengliedes fest an den Spannkluppen angeordnet sind und die Verbindung zweier aufeinander folgender Spannkluppen zwischen festen Gelenken über zwei lose miteinander verbundene Kettenglieder erfolgt, und wobei durch auf dem Gelenkbolzen dieser Verbindungsstelle wirkende Steuermittel die losen Kettenglieder der Kettenstränge aus ihrer langgestreckten Anordnung in eine abgewinkelte, den Abstand der aufeinanderfolgenden Spannmittel verkürzenden Form einstellbar sind.
Zusätzliche Steuerschienen für den Gelenkmechanismus sind, um eine Abstandsänderung zwischen den Spannkluppen zu erzielen, auch hier erforderlich.

Ausgehend von den bekannten biaxialen Reckvorrichtungen, mit der Möglichkeit eines gesteuerten axialen Schrumpfens der Folie, liegt der Erfindung die Aufgabe zugrunde, eine Vorrichtung zur simultanen biaxialen und zur axialen Behandlung von Folienbahnen zu schaffen, die auf zusätzliche Einrichtungen zur Steuerung, insbesondere der Längsschrumpfung verzichtet. Die Vorrichtung soll insbesondere
- ein Zugorgan besitzen, das geeignet ist, hohe Reckkräfte aufzunehmen und eine sichere Mitnahme der Spannkluppen im Reckbereich bei fest vorgegebener Teilung ermöglichen,
- einen Längsschrumpfbereich für die Folie ausbilden,
- ein leichtes Zugorgan zur Mitnahme von teilungsunabhängigen Spannkluppen bei fest vorgegebener Teilung des Zugorgans aufweisen,
- ein sicheres Einfädeln der Spannkluppen vom langsamlaufenden zum schnellaufenden Transportsystem, ohne daß die Folie von den Kluppen freigegeben wird, gewährleisten und schließlich
- einen einfachen Umbau in eine konventionell arbeitende Reckvorrichtung ermöglichen.

Erfindungsgemäß wird die Aufgabe gemäß den Merkmalen des Anspruchs 1 gelöst. Vorteilhafte Ausgestaltungen der Erfindung ergeben sich aus den weiteren Unteransprüchen und der Erfindungsbeschreibung.

Der wesentliche Gedanke der Erfindung besteht darin, daß es sich bei der Vorrichtung vom Prinzip her um eine Vorrichtung zum biaxialen Recken und axialen Schrumpfen einer Folienbahn handelt, die aus zwei separat ausgebildeten und separat angetriebenen Transportsystemen mit den dazugehörenden Führungsbahnen besteht und wobei das jeweilige Transportsystem die aus Klemmteilen und einem Rollteil bestehenden Spannkluppen temporär transportiert. Die Spannkluppen werden aus dem einen in das andere Transportsystem geführt. Während der Überführung und im zweiten Transportsystem erfolgt das Folienschrumpfen. Die Überführung der Spannkluppen erfolgt auf Führungsschienen, die beide separate Führungsbahnen praktisch zu einer Führungsbahn mit unterschiedlicher Zugorganausbildung und bei voneinander abweichenden Kettengeschwindigkeiten verbindet.
Die beiden sich in ihrem konstruktiven Aufbau unterscheidenden Zugorgane laufen also praktisch in einem identisch ausgebildeten Führungsbahnsystem. Das Zugorgan des ersten separaten Transportsystems übernimmt den Transport der Spannkluppen von dem Einlaß über die Aufheiz-, Reck- bis in die Fixierzone der Folienreckanlage.
In der Fixierzone werden die Spannkluppen von dem ersten Zugorgan, das über ein Kettenrad zu dem Einlauf zurückgeführt wird, freigegeben. Voraussetzung zur Mitnahme der einzelnen Spannkluppen durch das erste Zugorgan ist, daß Elemente des Zugorgans in den Spannkluppenkörper und zwischen zwei benachbarten Spannkluppenkörpern eingreifen können. Dies wird im ersten Transportsystem dadurch möglich, daß das Rollteil jeder Spannkluppe auf der dem Klemmteil gegenüberliegenden Rollteilfläche mittig eine vertikal verlaufende U-förmig ausgebildete Ausnehmung aufweist, in die der eine Kettenbolzen des Kettengliedes des ersten Zugorgans eingreift, während der andere Kettenbolzen zwischen zwei benachbarten Spannkluppen eingreift.

Der Antrieb des erten Zugorgans erfolgt wie in an sich bekannten Folienreckanlagen.

Das Zugorgan des zweiten separaten Transportsystems übernimmt die Spannkluppen nach deren Freigabe durch das erste Zugorgan. Das zweite Zugorgan transportiert die Spannkluppen mit einer geringeren Geschwindigkeit durch die Fixierzone, die Kühlzone bis in den Auslaß der Folienreckanlage.
Die Folie wird, wie an sich bekannt, im Auslaß ausgekluppt. Das Zugorgan läuft um das Antriebskettenrad des zweiten Transportsystems zusammen mit den Spannkluppen zur Umlenkung des zweiten Transportsystems zurück. Die Spannkluppen werden nachfolgend von dem ersten Transportsystem übernommen und in den Einlaß der Folienreckanlage zurückgeführt.
Im Gegensatz zu dem ersten Transportsystem werden hier die Spannkluppen nicht durch einen in dem Rollteil und nicht zwischen zwei benachbarten Rollteilen eingreifende Kettenbolzen mitgenommen und freigegeben, sondern durch z.B. in Art von Verzahnungen, die als horizontal verlaufende Mitnahmeelemente am Kettenkörper des Zugorgans des zweiten Transportsystems angeordnet sind, mitgenommen. Mit entsprechenden Gegenverzahnungen sind die dem Klemmteil gegenüberliegenden freien Flächen des Rollteils ausgerüstet.
Damit ist eine Mitnahme unabhängig von der Transportkettenführung möglich.
Der Transport der Spannkluppen erfolgt im Bereich des Übergangs von dem einen zum anderen Transportsystem durch Auflaufen der einen Spannkluppe auf die andere und durch zwangsweises Weiterschieben der Spannkluppen. Dabei kann zwischen den einzelnen Spannkluppen, vornehmlich an dem Rollteil, ein Begrenzungselement vorgesehen sein.

Dieser Prozeß des Auflaufens und Weiterschiebens hält für jede Spannkluppe solange an, bis die betreffende Spannkluppe von dem Zugorgan des zweiten Transportsystems mitgenommen wird. Die Führung der Spannkluppen erfolgt in diesem Bereich ausschließlich durch eine untere und eine obere Übergangsführungsbahn. Dadurch, daß die Folie im Bereich des Übergangs von einem Transportsystem zum anderen von den Spannkluppen nicht freigegeben wird, entsteht kein unkontrollierter Schrumpf in Folienquerrichtung.

Das Rollteil der Spannkluppen, das mit einer entsprechenden Anzahl von äußeren unteren und oberen horizontal angeordneten Führungsrollen versehen ist, wird somit von der oberen und unteren Übergangsführungsbahn sicher geführt.
Innerhalb des Rollteiles ist wenigstens eine Führungsrolle vertikal angeordnet. Diese Führungsrolle dient neben der vertikalen Spannkluppenführung auf der unteren Führungsbahn gleichzeitig der Gewichtsaufnahme der Spannkluppe und damit auch als Tragrolle.

Wie bereits vorstehend ausgeführt, erfolgt die Mitnahme der Spannkluppen im ersten separaten Transportsystem durch einen entsprechend ausgebildeten Kettenbolzen des Kettengliedes eines endlos umlaufenden Transportorgans. An seinem freien oberen und unteren Ende trägt jeder Kettenbolzen eine horizontal liegende Laufrolle.
Die Kraftübertragung innerhalb des Zugorgans erfolgt, wie allgemein bekannt, durch entsprechend kräftig ausgelegte Zuglaschen.

Zur vertikalen Abstützung des Zugorgans auf der unteren Führung der in Gestalt eines C-Profiles mit ungleichlangen Profilschenkeln ausgebildeten Führungsbahn ist wenigstens einer der Kettenbolzen oder eine der Zuglaschen jedes Kettengliedes im Bereich der unteren horizontal angeordneten Laufrolle mit einer vertikal angeordneten Laufrolle ausgerüstet.

Um ein sicheres Einfädeln der Spannkluppen, die aus dem mit der geringeren Transportgeschwindigkeit umlaufenden Zugorgan kommen und von dem mit höherer Transportgeschwindigkeit umlaufenden Zugorgan übernommen werden, zu gewährleisten, können die an sich untereinander nicht verbundenen Spannkluppen mit integrierten zusätzlichen Laschen ausgerüstet sein. Die Laschen sind dabei so ausgebildet, daß sich die Spannkluppen allein auf den maximalen Teilungsabstand (T) des ersten Zugorgans, das ist das Abstandsmaß zwischen zwei Mitnahme-Kettenbolzen des ersten Zugorgans, einstellen können, weil die Aufnahmebohrungen in den Mitnahmelaschen, in die die Laufrollenachsen eingreifen, als Langlöcher ausgebildet sind. Haben die Spannkluppen dieses Maß erreicht, gehen die Mitnahmelaschen, die zwei benachbarte Spannkluppen miteinander verbinden, auf Anschlag.
Ein kleinerer Teilungsabstand wird im Prozeß des Folienschrumpfens erreicht, wenn die Kettenbolzen der ersten Transportsysteme die Spannkluppen freigegeben haben. Da die Laschen genau im Drehpunkt des gesamten Transportsystems angeordnet sind, haben die Radien der Umlenkungen der Führungsbahnen keinen Einfluß auf den Abstand der Spannkluppen zueinander.

Ausführungsbeispiele der Erfindung sind nachfolgend beschrieben und durch Zeichnungen erläutert. In den zugehörigen Zeichnungen zeigen
- Figur 1: in schematischer und perspektivischer Darstellung zwei miteinander verbundene Transportsysteme einer Folienreckanlage,
- Figur 2: den Übergangsbereich der Transportsysteme mit detaillierter Darstellung der Führungsbahnen in perspektivischer Darstellung,
- Figur 3: das Zugorgan des ersten Transportsystems im Eingriff mit dem Rollteil und zwischen zwei Rollteilen nach Ansicht B gem. Figur 4,
- Figur 4: die Zugorgan- und Rollteilführung in der Seitenansicht gem. Schnitt B-B in Figur 3,
- Figur 5: eine Spannkluppe nach Schnitt C-C gem. Figur 4,
- Figur 6: eine Spannkluppe in der Führungsbahn des zweiten Transportsystems im Eingriff mit dem Zugorgan in der Seitenansicht,
- Figur 7: eine Draufsicht gem. Schnitt A-A nach Figur 6,
- Figur 8: das Rollteil einer Spannkluppe in der Führungsbahn des zweiten Transportsystems mit integrierter Mitnahmelasche gem. Ansicht A in Figur 9,
- Figur 9: das Rollteil mit Mitnahmelasche gem. Figur 8 in der Draufsicht,
- Figur 10: das Rollteil mit Mitnahmelasche in der Draufsicht bei maximaler Teilung "T" zwischen den Spannkluppen,
- Figur 11: das Rollteil mit Mitnahmelasche in der Draufsicht bei minimaler Teilung "t" zwischen den Spannkluppen.

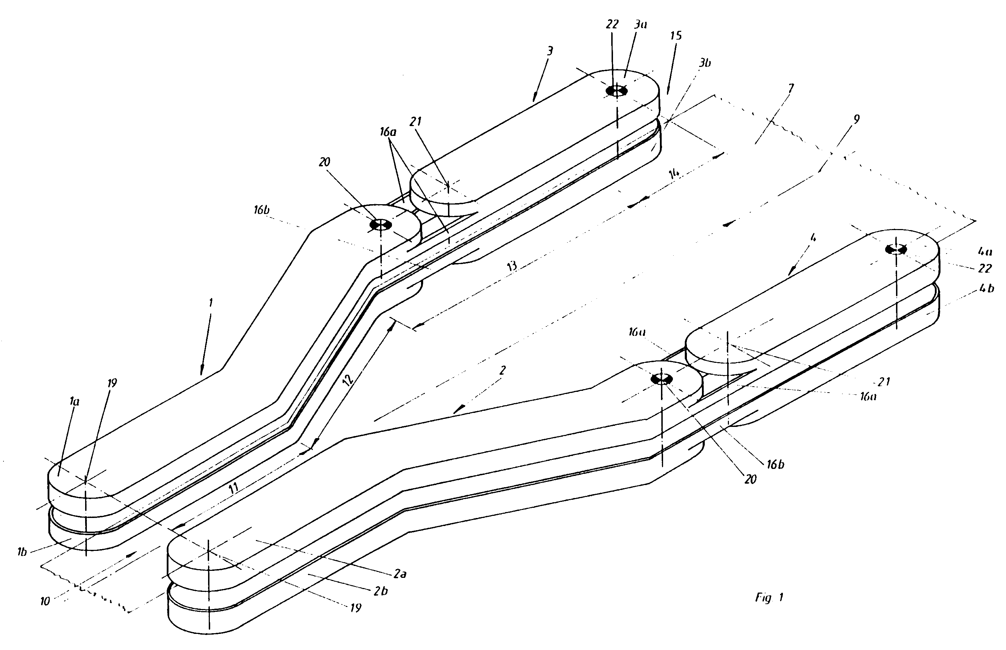

Aus Figur 1 sind die miteinander verbundenen Transportsysteme 1,2,3,4 einer Folienreckvorrichtung in perspektivischer Ansicht dargestellt.
Jedes Transportsystem besteht aus einem oberen 1a,2a,3a,4a und einem unteren 1b,2b,3b,4b C-förmig ausgebildeten Systemteil. Jedes Systemteil besitzt eine äußere Führungsschiene 5a,5b, die der Folienbahn 7 zugewandt ist und eine innere Führungsschiene 6a,6b, die der Folienbahn 7 abgewandt ist.

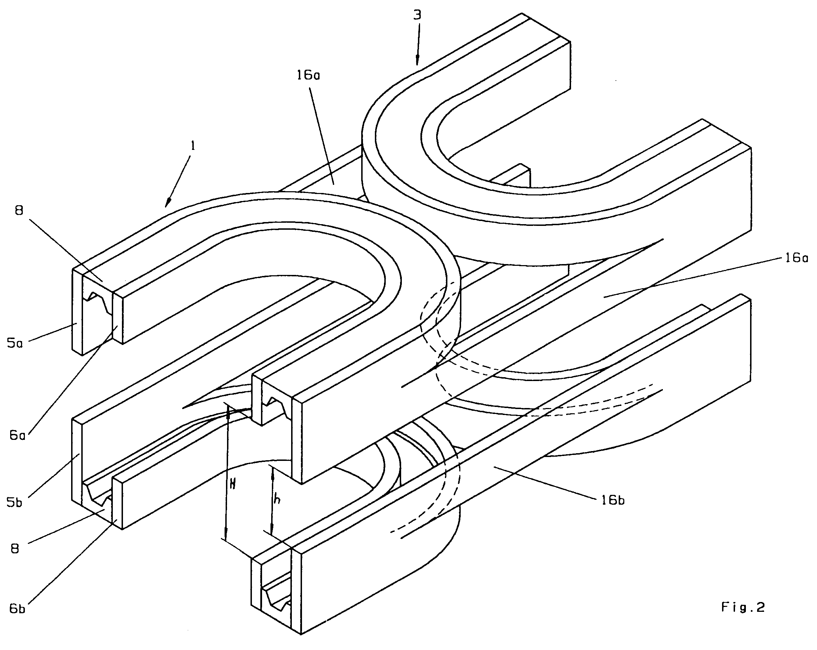

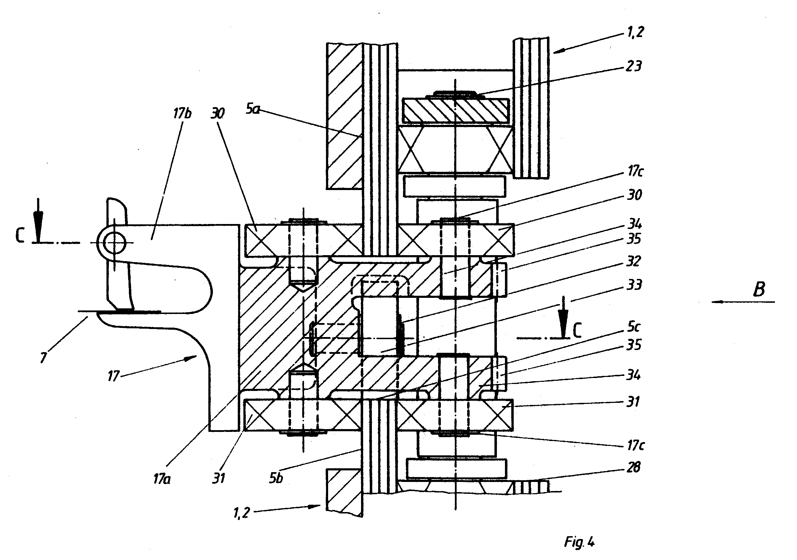

Die Führungsschienen sind mittels eines querliegenden Verbindungsprofils 8 derart miteinander verbunden, daß sich das vorgenannte, C-förmig ausgebildete Systemteil, wie in Figur 2 gezeigt, ergibt. Die zwei gegenüberliegend angeordneten Systemteile bilden die Führungsbahn des jeweiligen Transportsystems. Die einander gegenüberliegenden Führungsschienen sind gleich hoch. Die lichte Höhe "h" zwischen den äußeren Führungsschienen 5a,5b ist geringer als die lichte Höhe "H" zwischen den inneren Führungsschienen 6a,6b. Wie Figur 1 zeigt, sind die Transportsysteme 1,2,3,4 symmetrisch zur Mitte 9 der Folienbahn 7 angeordnet.
In den Bereichen des Folieneinlaufs 10, der Aufheizzone 11 bis zum Beginn der Reckzone 12 sind, in Laufrichtung der Folienbahn 7 gesehen (siehe Richtungspfeil in der Mitte der Folienbahn 7), die Transportsysteme 1,2 zueinander parallel und im Bereich der Reckzone 12 zueinander divergierend angeordnet. An einem Bereich, der den Übergang von dem einen Transportsystem 1,2 zu einem weiteren Transportsystem 3,4 bildet, schließt sich der Folienschrumpfbereich bzw. die Fixierzone 13 an.
In der Fixierzone 13, der nachfolgenden Kühlzone 14 bis hin zum Auslaß 15 verlaufen die Transportsysteme 1,2,3,4 im wesentlichen wieder parallel zueinander.
Die einzelnen Transportsysteme 1,3 und 2,4 sind durch sogenannte obere 16a und untere 16b Übergangsführungsbahnen miteinander verbunden. Beim Übergang der die Folienbahn 7 festhaltenden Spannkluppen 17 (Fig. 4) von den Transportsystemen 1,2 zu den Transportsystemen 3,4 spielt sich der sogenannte Schrumpfprozeß in der Folienbahn 7 ab.

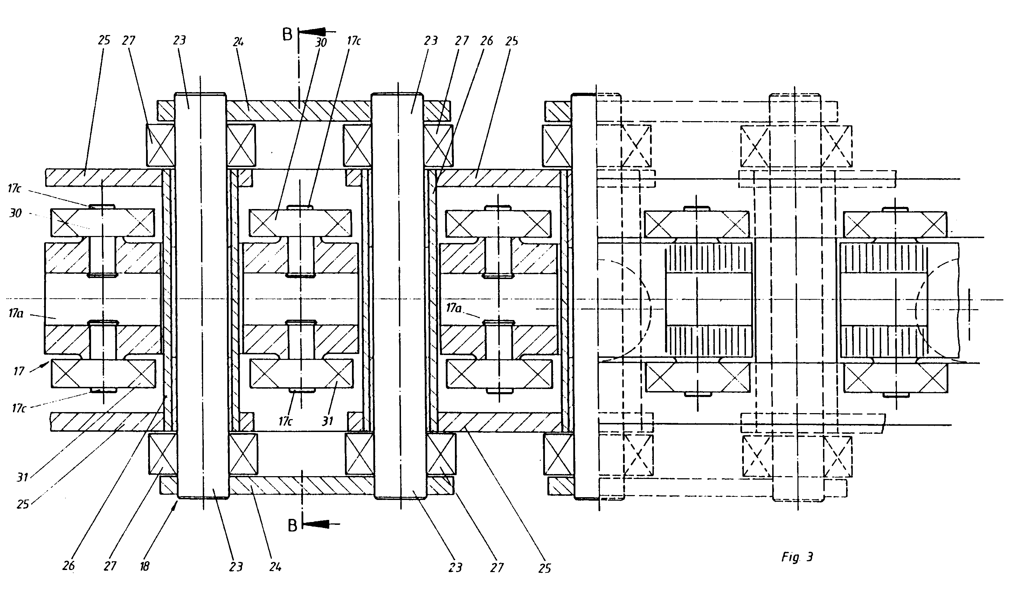

Jedes Transportsystem 1,2,3,4 verfügt über ein Antriebsrad und eine Umlenkung für das innerhalb jeder der C-förmigen Führungen integrierte Zugorgan 18 (siehe auch Figuren 3 bis 5 und 8). Die nicht dargestellten Antriebsräder und Umlenkungen sind durch die sie aufnehmenden Wellen 19,20,21,22 ersatzweise gezeigt.

In Figur 2 sind die Führungsschienen-Umlenkungen der Transportsysteme 1,3 im Bereich des Übergangs von dem einen zum anderen Transportsystem dargestellt. Die Verbindung zwischen den einzelnen Transportsystemen 1,3 und 2,4 wird durch Übergangsführungsbahnen 16a,16b hergestellt. Die Übergangsführungsbahnen 16a,16b sind geradlinig ausgebildete Träger, die einen nahtlosen Übergang und eine exakte Führung der Spannkluppen 17 gewährleisten. Die Übergangsführungsbahnen 16a,16b verbinden dabei nur die äußeren oberen und unteren Führungsschienen 5a,5b der C-förmigen Führungen.

In den Figuren 3 bis 5 ist das in den Transportsystemen 1,2 geführte Zugorgan 18 im Eingriff mit einer Spannkluppe 17 gezeigt.
Das Zugorgan 18 ist in den Transportsystemen 1,2 als Gliederkette aufgebaut. Ein Kettenglied besteht dabei aus zwei voneinander beabstandet angeordneten Kettenbolzen 23, die über Außenlaschen 24 und Innenlaschen 25 verbunden sind.
Jeder Kettenbolzen 23 ist drehbeweglich in einer Buchse 26 aufgenommen.
Zwischen den Innenlaschen 25, die mit der betreffenden Buchse 26 verbunden sind, und den Außenlaschen 24 tragen die Kettenbolzen 23 Laufrollen 27.
Durch die Laufrollen 27 ist das Zugorgan 18 an den inneren Seitenflächen der Transportsysteme 1,2 geführt.
Die Kettenbolzen 23 können zur Abstützung des Kettengewichtes mit je einer vertikalen Laufrolle (hier nicht dargestellt) ausgerüstet sein, die sich auf der schmalen waagerechten Lauffläche 28 der unteren Führungsschiene 6b des Transportsystems 1,2 abstützt.
Eine Vielzahl dieser miteinander verbundenen Kettenglieder bilden das endlos umlaufende Zugorgan in den Transport- systemen 1,2.

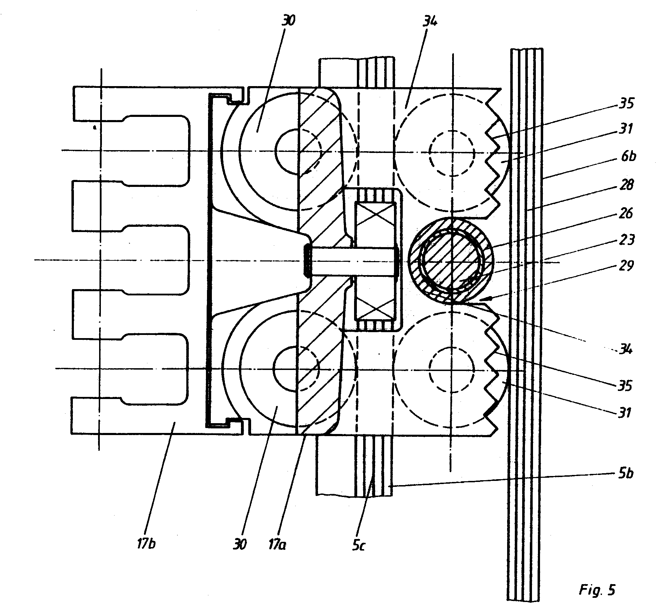

Figur 3 zeigt gemäß Ansicht B weiter eine Buchse 26, die einen Kettenbolzen 23 aufnimmt, in Eingriff mit einer Spannkluppe 17, während die den anderen Kettenbolzen 23 aufnehmende Buchse 26 zwischen zwei einander benachbarten Spannkluppen 17 liegt. Jede Spannkluppe 17 besteht, wie allgemein bekannt, aus dem Rollteil 17a und aus dem den Folienrand der Folie 7 haltenden Klemmteil 17b.
Jedes Rollteil 17a besitzt mittig auf der dem Klemmteil 17b gegenüber liegenden Seite eine vertikal verlaufende U-förmige Ausnehmung 29 (siehe auch Figur 5). In jede dieser Ausnehmungen 29 greift die den Kettenbolzen 23 aufnehmende Buchse 26 ein, um die betreffende Spannkluppe 17 innerhalb des Transportsystems 1,2 mitzunehmen.
Das Rollteil 17a jeder Spannkluppe 17 nimmt auf vertikalen Achsen 17c obere horizontale Laufrollen 30 und untere horizontale Laufrollen 31 auf. Zwischen die genannten Laufrollen 30,31 greifen die äußeren oberen und unteren Führungsschienen 5a,5b der Transportsysteme 1,2 ein.

Zur vertikalen Abstützung der gesamten Spannkluppe 17 ist auf einer Achse 32, die den zentralen Teil des Rollteils 17a zwischen den oberen und unteren Laufrollen 30,31 durchgreift, eine Stützrolle 33 drehend gelagert. Diese Stützrolle 33 rollt auf der schmalen horizontalen Lauffläche 5c der unteren äußeren Führungsbahn 5b ab.

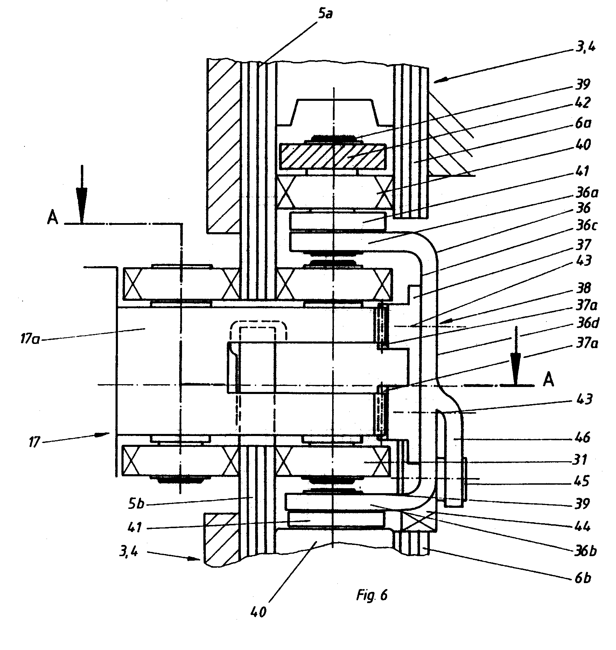

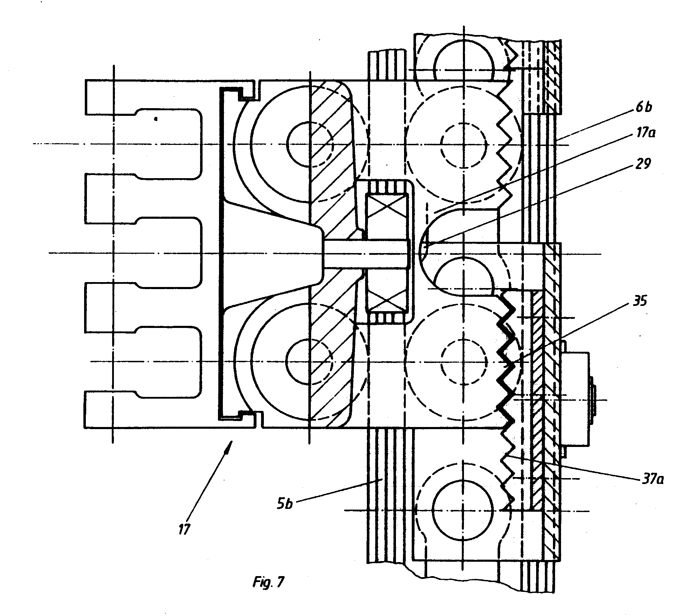

Wie aus den Figuren 3 bis 5 weiter zu erkennen ist, sind die die horizontalen Laufrollen 30,31 des Rollteils 17a tragenden Schenkel 34 mit einer Verzahnung 35 in Art einer Zahnstange versehen.
In diese Verzahnung 35 greift, nachdem der Transport der betreffenden Spannkluppen 17 durch das Zugorgan 18 der Transportsysteme 1,2 beendet ist und die Spannkluppen 17 über die Übergangsführungsbahnen 16a,16b (Figur 1,2) zu den Transportsystemen 3,4 gelangten, die Verzahnung 37a eines am Kettenkörper 36 des Zugorgans 38 der Transportsysteme 3,4 angeordneten Mitnahmelelements 37 ein, wie nachfolgend in den Figuren 6 und 7 dargestellt.

Die Figuren 6 und 7 zeigen die Mitnahme der Spannkluppen 17 in der Schrumpf- und Fixierzone 13 (Figur 1) der Folienreckanlage. Gemäß Figur 6 besteht das zwischen den Führungsschienen 5a,6a und 5b,6b der Transportsysteme 3,4 eingeordnete Zugorgan 38 ebenfalls aus einzelnen Kettengliedern. Jedes Kettenglied besteht hierbei aus dem als C-Profil ausgebildeten Kettenkörper 36, mit auf dessen oberen und unteren Schenkel 36a,36b zwei voneinander beabstandet angeordneten Achsen 39; jede der Achsen 39 trägt eine horizontal liegende Laufrolle 40. Untereinander sind die Kettenkörper 36 durch Innenlaschen 41 und die freien Enden der Laufrollen-Achsen 39 durch Außenlaschen 42 verbunden. An der inneren Basisfläche 36c des Kettenkörpers 36 ist über entsprechende, nur angedeutete Befestigungselemente 43 das mit den Verzahnungen 37a ausgerüstete Mitnahmeelement 37 derart verbunden, daß diese Verzahnungen 37a mit den Verzahnungen 35 der Schenkel 34 des Rollteils 17a in Eingriff kommen können. Zur vertikalen Abstützung des Zugorgans 38 ist auch hier jeder Kettenkörper 36 von einer vertikal angeordneten Stützrolle 44 getragen, die an der äußeren Basisfläche 36d mittig unterhalb der Folienklemmebene der Spannkluppe 17 von einer Achse 45 getragen wird. In der Figur 6 ist nicht gezeigt, daß der Kettenkörper 36 eine von den Basisflächen 36c,36d in den unteren Schenkel 36b übergehende Ausnehmung für den Durchtritt der Stützrolle 44 aufweist.
Die Achse 45 der Stützrolle 44 wird von einem oberhalb der vorgenannten Ausnehmung vorhandenen Arm 46 getragen.

In Figur 7 wird nochmals deutlich, daß der Transport der Spannkluppen 17 im Transportsystem 3,4 nicht mittels in die U-förmigen Ausnehmungen 29 der Rollteile 17a eingreifender Kettenbolzen 23 erfolgt, sondern ausschließlich mittels der Verzahnungen 35,37a, realisiert wird.

Aus den Figuren 3 bis 7 und deren Beschreibung ist entnehmbar, daß die mittels der Führungsschienen 5a,5b,6a,6b und der Übergangsführungsbahnen 16a,16b geführten Spannkluppen 17 miteinander nicht verbunden sind. Daher ist das sichere Einfädeln der Spannkluppen 17, insbesondere beim Übergang von den Transportsystemen 3,4 in die Transportsysteme 1,2, nicht ohne besondere Vorkehrungen möglich.

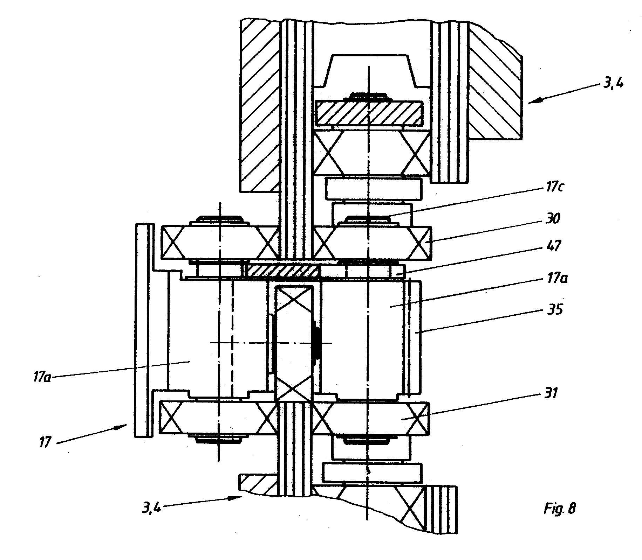

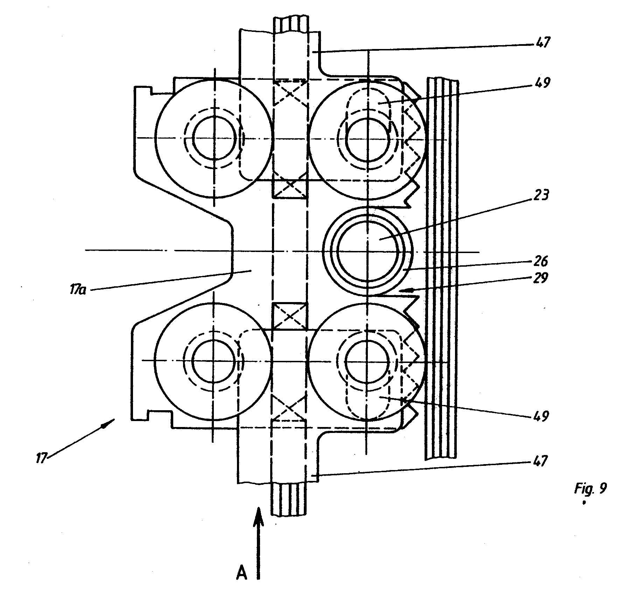

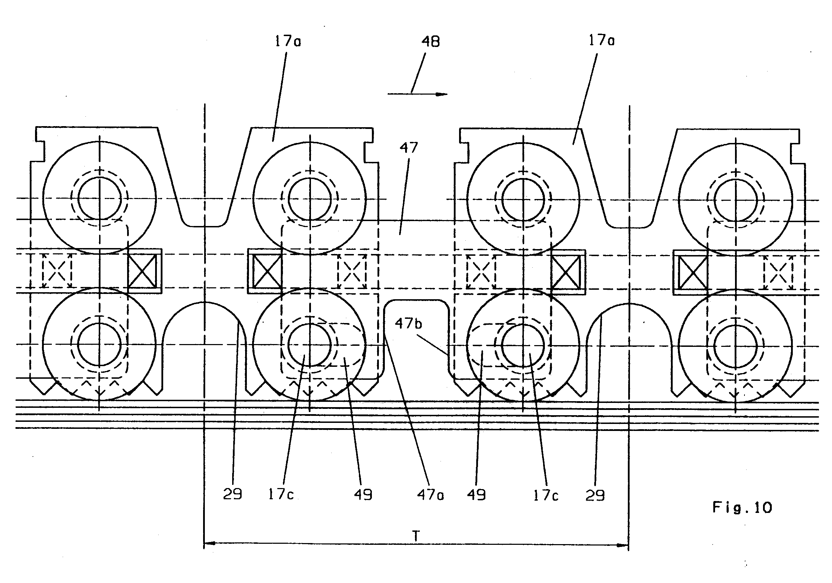

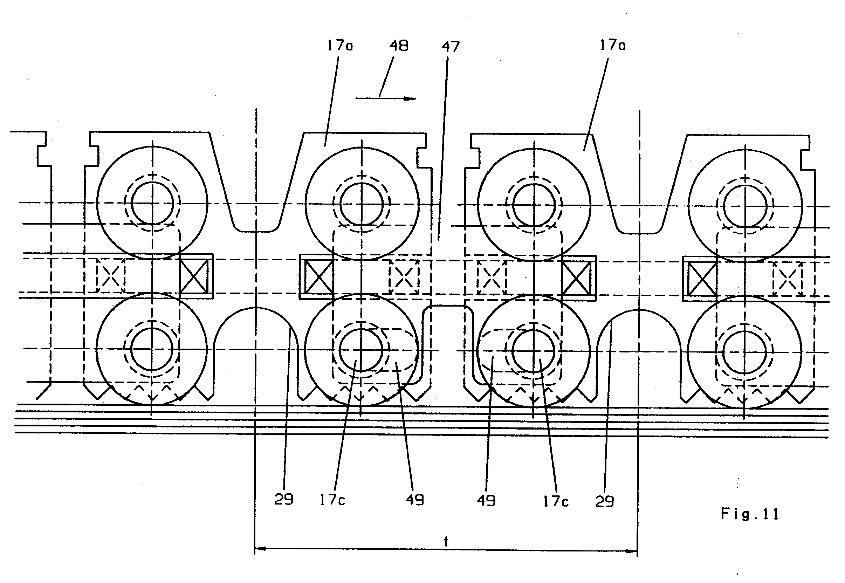

Gemäß der Figuren 8 bis 11 sind zum Zwecke des sicheren Einfädelns der aus dem langsam laufenden Transportsystemen 3,4 in die schnell laufenden Transportsysteme 1,2 zurückzuführenden Spannkluppen 17 in den einander benachbarten Spannkluppen 17 Mitnahmelaschen 47 integriert.
Wie insbesondere aus den Figuren 10 und 11 zu entnehmen, ist die Mitnahmelasche 47 C-förmiger Gestalt. In jedem der Laschenschenkel 47a,47b ist in Transportrichtung der Spannkluppen 17 gesehen, siehe auch Richtungspfeil 48, ein Langloch 49 vorhanden. Jedes Langloch 49 wird von den auf der Seite der U-förmigen Ausnehmung 29 des Rollteils 17a liegenden Achsen 17c durchgriffen.
Die Mitnahmelasche 47 ist damit zwischen dem oberen Ende des mit Verzahnung 35 ausgerüsteten, massiv ausgebildeten Rollteils 17a und den Laufrollen 30,31 integriert.
Die Langlöcher 49 in den Mitnahmelaschen 47 ermöglichen damit, daß die Spannkluppen 17 sich während des Einfädelns auf die entsprechende Teilung des Zugorgans (von "T" bis "t" oder umgekehrt) in den Transportsystemen 1,2 einstellen. Die Teilung "T" ist der maximale Mittenabstand (Figur 10) zwischen den in die U-förmigen Ausnehmungen 29 der Rollenteile 17a zweier benachbarter Spannkluppen 17 eingreifenden Kettenbolzen 23 bzw. Buchsen 26, während die Teilung "t" den minimalen Mittenabstand darstellt.

Das Schrumpfen und Recken der Folie ist daher bei einer derartigen Verbindung der Spannkluppen 17 untereinander im Differenzbereich zwischen "T" und "t" gewährleistet. Mit der Integration einer Mitnahmelasche 47 in die Spannkluppen 17 ist lediglich eine Möglichkeit des sicheren Einfädelns beim Übergang von einem zum anderen Transportsystem der an sich nicht miteinander verbundenen Spannkluppen 17 aufgezeigt worden.

## Patentansprüche

1. Vorrichtung zum simultanen biaxialen Recken und axialen Schrumpfen thermoplastischer Folienbahnen, mit an beiden Rändern der Folienbahn angreifenden Klemmteilen von aus Klemm- und Rollteil bestehenden Kluppen, die in Führungsbahnen mittels Rollenführung geführt werden, und die Führungsbahnen nacheinander von einer Einlaßzone über Behandlungszonen zu einer Auslaßzone zueinander parallel, voneinander divergierend und im wesentlichen wieder parallel zueinander verlaufend angeordnet sind, mit endlos umlaufenden Zugorganen, die die bahngeführten Kluppenkörper mitnehmen und wobei die Zugorgane mit einer Umlenkung im Einlauf und mit einem Antriebsrad im Auslauf jeder Führungsbahn in Eingriff stehen, **dadurch gekennzeichnet**, daß
- ein erstes und ein zweites separat angetriebenes Transportsystem (1,2 und 3,4) mit voneinander abweichenden Transportgeschwindigkeiten aus jeweils einem oberen und einem unteren Systemteil (1a,1b,2a,2b,3a,3b,4a,4b) zur Führung der aus Kettengliedern bestehenden Zugorgane (18,38) besteht,
- in den Systemteilen freilaufend aufgenommene Spannkluppen (17) eingeordnet sind, die ein Klemmteil (17b) und ein Rollteil (17a) aufweisen, wobei jede Spannkluppe (17) mit jedem Zugorgan (18,38) innerhalb der Transportsysteme (1,3 und 2,4) temporär in Wirkverbindung steht,
- Übergangs-Führungsbahnen (16a,16b) vorhanden sind, die die Transportsysteme (1,3 und 2,4) miteinander verbinden, um die Spannkluppen (17) aus dem ersten Transportsystem (1,2) in das zweite Transportsystem (3,4) zu führen und
- zum Transport der Spannkluppen (17) in dem ersten Transportsystem (1,2) jedes Rollteil (17a) auf der den Klemmteilen (17b) gegenüberliegenden Seite mittig eine U-förmige Ausnehmung (29) aufweist, in die der freie zylindrische Teil von ersten Kettenbolzen (23) eingreift und zweite Kettenbolzen (23) von Kettengliedern des ersten Zugorgans (18) zwischen einander benachbarten Rollenteilen (17a) eingreifen und
- zum Transport der Spannkluppen (17) im zweiten Transportsystem (3,4) auf der dem Klemmteil (17b) gegenüberliegenden Seite jedes Rollteils (17) wenigstens ein Mitnahmeelement (35) vorgesehen ist, das mit einem weiteren Mitnahmeelement (37), das jedem Kettenglied des Zugorgans (38) des zweiten Transportsystems (3,4) zugeordnet ist, unabhängig von der Teilung des Zugorgans in Wirkverbindung kommt.

2. Vorrichtung nach Anspruch 1, **dadurch gekennzeichnet**, daß die Systemteile (1a,1b,2a,2b,3a,3b,4a,4b) jedes Transportsystems (1,2,3,4) aus einem etwa C-förmig ausgebildeten Profil bestehen und derart paarweise zueinander liegen, daß deren Profilschenkel einander in vertikaler Ebene gegenüberliegend angordnet sind.

3. Vorrichtung nach Anspruch 2**, dadurch gekennzeichnet**, daß die einander gegenüberliegenden Profilschenkel gleicher Höhe sind und die äußeren und inneren Führungsschienen (5a,5b und 6a,6b) bilden.

4. Vorrichtung nach Anspruch 1 bis 3, **dadurch gekennzeichnet**, daß die Seitenflächen von zwei der einander gegenüberliegenden Führungsschienen (5a,5b) die horizontale Rollenführung der die Klemmteile (17b) tragenden Rollteile (17a) übernehmen.

5. Vorrichtung nach Anspruch 1 bis 3, **dadurch gekennzeichnet**, daß die waagerechte Fläche der unteren Führungsschiene (5b) vertikale Rollenführung der Rollteile (17a) ist.

6. Vorrichtung nach Anspruch 3, **dadurch gekennzeichnet**, daß die Höhe der Schienen (5a,5b) größer ist als die Höhe der benachbarten Schienen (6a,6b).

7. Vorrichtung nach Anspruch 1, wonach die Kettenglieder des Zugorgans (18) der ersten Transportsystems (1,2) aus Kettenbolzen (23) und aus diese miteinander stirnseitig verbindenden Kettenlaschen (24,25) bestehen und die Kettenbolzen (23) an ihren freien Enden mit jeweils einer Laufrolle (27) ausgerüstet sind, **dadurch gekennzeichnet**, daß die Laufrollen (27) zwischen jeweils einer äußeren und einer inneren Schiene (5a,6a und 5b,6b) geführt sind.

8. Vorrichtung nach Anspruch 7, **dadurch gekennzeichnet**, daß wenigstens ein Kettenbolzen (23) jedes Kettengliedes mit einer die vertikale Abstützung des Zugorgans (18) übernehmenden Stützrolle (33) ausgerüstet ist.

9. Vorrichtung nach Anspruch 8, **dadurch gekennzeichnet**, daß die waagerechte Fläche (28) der Führungsschiene (6b) Lauffläche für die Tragrollen der Kettenglieder ist.

10. Vorrichtung nach Anspruch 1 und 2, **dadurch gekennzeichnet**, daß die Kettenglieder des Zugorgans (38) der zweiten Transportsysteme (3,4) bestehen aus
- einem als C-Profil ausgebildeten Kettenkörper (36)
- zwei auf der jeweiligen Außenseite der Profilschenkel des Kettenkörpers (36) achsparallel angeordnete Achsen (39) zur Aufnahme von jeweils einer horizontal liegenden Laufrolle (40)
- jeweils einer zwischen jeder Laufrolle (40) und dem Profilschenkel eingebundenen Innenlasche (41)
- jeweils einer die freien Enden der Achse (39) des Kettenkörpers (36) verbindenden Außenlaschen (42)
- wenigstens einen mit dem Kettenkörper (36) form- oder kraftschlüssig verbundenen z.B. eine Verzahnung (37a) aufweisendes Mitnahmeelement (37) und
- wenigstens einer jeden Kettenkörper (36) vertikal tragenden Stützrolle (44).

11. Vorrichtung nach Anspruch 1 und 10, **dadurch gekennzeichnet**, daß die Laufrollen (40) zwischen jeweils einer äußeren und einer inneren Schiene (5a,6a und 5b,6b) der Transportsysteme (3,4) geführt sind.

12. Vorrichtung zur Mitnahme und zum Einfädeln der die Klemmteile tragenden Rollteile, die aus einem ersten separat angetriebenen Transportsystem in ein zweites separat angetriebenes Transportsystem geführt werden und wobei die Umlaufgeschwindigkeiten der Transportsysteme voneinander abweichen, nach Anspruch 1, **dadurch gekennzeichnet**, daß die einander benachbarten Rollteile über wenigstens eine auf der Seite der U-förmigen Ausnehmung (29) im Rollteil (17a) integrierte Mitnahmelasche (47) verbunden sind und wobei die Mitnahmelaschen (47) zur Aufnahme der Rollenachsen (17c) mit Langlöchern (49) ausgerüstet sind.

## Claims

1. Device for the simultaneous biaxial stretching and axial shrinking of thermoplastic films with clamping elements of clips composed of clamp and roller elements engaging on both edges of the film, the clips being guided in guide tracks by guide rollers and the guide tracks extending parallel to one another, diverging from one another, and extending substantially parallel to one another again, in succession, from an inlet region through treatment regions to an outlet region, and with endless circulating conveyor members which entrain the clip bodies guided by the track, the conveyor members being in engagement with a deflector at the input and with a drive wheel at the output of each guide track,
characterized in that
- first and second separately-driven conveyor systems (1, 2 and 3, 4) with different conveyor speeds are composed of respective upper and lower system elements (1a, 1b; 2a, 2b; 3a, 3b; 4a, 4b) for guiding the conveyor members (18, 38) which are composed of chain links,
- tensioning clips (17) including a clamp element (17b) and a roller element (17a) are arranged and held for running freely in the system elements, each tensioning clip (17) being temporarily in active contact with each conveyor member (18, 38) within the conveyor systems (1, 3 and 2, 4),
- transfer guide tracks (16a, 16b) are present and connect the conveyor systems 1, 3 and 2, 4) with one another in order to guide the tensioning clips (17) out of the first conveyor system (1, 2) into the second conveyor system (3, 4), and
- in order to transport the tensioning clips (17) in the first conveyor system (1, 2), each roller element (17a) comprises, on the side opposite the clamp elements (17b), a central U-shaped recess (29) in which the free cylindrical portion of first link pins (23) engage, and second link pins (23) of chain links of the first conveyor member (18) engage between adjacent roller elements (17a), and
- in order to transport the tensioning clips (17) in the second conveyor system (3, 4), at least one entrainment element (35) is provided on the side of each roller element (17) opposite the clamp element (17b) and, irrespective of the spacing of the conveyor member, comes into active contact with a further entrainment element (37) which is associated with each chain link of the conveyor member (28) of the second conveyor system (3, 4).

2. Device according to Claim 1, characterized in that the system elements (1a, 1b, 2a, 2b, 3a, 3b, 4a, 4b) of each conveyor system (1, 2, 3, 4) are composed of approximately C-shaped profiles and are arranged in pairs in a manner such that the sides of their profiles are disposed opposite one another in vertical planes.

3. Device according to Claim 2, characterized in that the profile sides disposed opposite one another are of the same height and form the outer and inner guide rails (5a, 5b and 6a, 6b).

4. Device according to Claims 1 to 3, characterized in that the side surfaces of two guide rails (5a, 5b) disposed opposite one another take care of the horizontal roller guiding of the roller elements (17a) carrying the clamp elements (17b).

5. Device according to Claims 1 to 3, characterized in that the horizontal surface of the lower guide rail (5b) is a roller guide for the vertical guiding of the roller element (17a).

6. Device according to Claim 3, characterized in that the height of the rails (5a, 5b) is greater than the height of the adjacent rails (6a, 6b).

7. Device according to Claim 1, according to which the chain links of the conveyor member (18) of the first conveyor system (1, 2) are composed of link pins (23) and of chain link plates connecting the pins (23) to one another on their faces and the link pins (23) are equipped with respective track rollers (27) at their free ends, characterized in that the track rollers (27) are guided between respective outer and inner rails (5a, 6a and 5b, 6b).

8. Device according to Claim 7, characterized in that at least one link pin (23) of each chain link is equipped with a supporting roller (33) which takes care of the vertical support of the conveyor member (18).

9. Device according to Claim 8, characterized in that the horizontal surface (28) of the guide rail (6b) is a running surface for the supporting rollers of the chain links.

10. Device according to Claims 1 and 2, characterized in that the chain links of the conveyor member (38) of the second conveyor system (3, 4) are composed of
- a chain body (36) formed as a C-shaped profile,
- two pins (39) arranged axially parallel on the respective outer sides of the profile sides of the chain body (36) for holding respective track rollers (40) disposed horizontally,
- respective inner link plates (41) engaged between each track roller (40) and the profile side,
- respective outer link plates (42) engaging the free ends of the pins (39) of the chain body (36),
- at least one entrainment element (37) connected to the chain body (36) with a positive or non-positive fit and including, for example, a set of teeth (37a), and
- at least one supporting roller (44) supporting each chain body (36) vertically.

11. Device according to Claims 1 and 10, characterized in that the track rollers (40) are guided between respective outer and inner rails (5a, 6a and 5b,6b) of the conveyor system (3, 4).

12. Device for the entrainment and threading-in of the roller elements which carry the clamp elements and which are guided from a first separately-driven conveyor system into a second separately-driven conveyor system, in which thhe speed of circulation of the conveyor systems differ from one another, according to Claim 1, characterized in that the roller elements adjacent one another are connected by means of at least one entrainment link (47) incorporated in the roller element (17a) on the side with the U-shaped recess (29), the entrainment links (47) being equipped with elongate slots (49) for holding the roller pins (17c).

## Revendications

1. Dispositif pour l'étirage biaxial et le retrait axial simultanés de feuilles thermoplastiques, comprenant des pièces de coincement, venant en prise avec les deux bords de la feuille, de pinces constituées d'une pièce de coincement et d'une pièce de roulement, et guidées dans des pistes de guidage au moyen d'un guidage roulant, les pistes de guidage étant agencées en succession parallèle d'une zone d'entrée jusqu'à une zone de sortie, en transitant par des zones de traitement, après quoi elles divergent mutuellement, puis s'étendent de nouveau, pour l'essentiel, avec parallélisme mutuel ; et des organes de traction tournant sans fin et entraînant les corps des pinces guidés par les pistes, les organes de traction étant en prise avec un système de renvoi à l'entrée, et avec une roue d'entraînement à la sortie de chaque piste de guidage, caractérisé par le fait
- que des premier et second systèmes de transport (1, 2 et 3, 4), entraînés séparément et présentant des vitesses de transport mutuellement différentes, consistent à chaque fois en des parties supérieure et inférieure (1a, 1b ; 2a, 2b ; 3a, 3b ; 4a, 4b) en vue de guider les organes de traction (18, 38) constitués par des chaînons,
- que les parties des systèmes renferment des pinces de serrage (17) intégrées à course libre, qui comprennent une pièce de coincement (17b) et une pièce de roulement (17a), chaque pince de serrage (17) étant temporairement en prise interactive avec chaque organe de traction (18, 38) à l'intérieur des systèmes de transport (1, 3 et 2, 4),
- qu'on a prévu des pistes (16a, 16b) de guidage transitoire, qui relient l'un à l'autre les systèmes de transport (1, 3 et 2, 4) pour guider les pinces de serrage (17) hors du premier système de transport (1, 2) jusque dans le second système de transport (3, 4),
- que, pour acheminer les pinces de serrage (17) dans le premier système de transport (1, 2), chaque pièce de roulement (17a) présente centralement, du côté tourné à l'opposé des pièces de coincement (17b), un évidement (29) configuré en U et dans lequel pénètre la partie cylindrique libre de premiers tourillons d'articulation (23), des seconds tourillons d'articulation (23) de chaînons du premier organe de traction (18) s'engageant entre des pièces de roulement (17a) mutuellement voisines, et
- qu'il est prévu pour acheminer les pinces de serrage (17) dans le second système de transport (3, 4), du côté de chaque pièce de roulement (17) tourné à l'opposé de la pièce de coincement (17b), au moins un élément d'entraînement (35) qui entre en liaison interactive, indépendamment de la répartition de l'organe de traction, avec un autre élément d'entraînement (37) affecté à chaque chaînon de l'organe de traction (38) du second système de transport (3, 4).

2. Dispositif selon la revendication 1, caractérisé par le fait que les parties (1a, 1b, 2a, 2b, 3a, 3b, 4a, 4b) de chaque système de transport (1, 2, 3, 4) sont constituées d'un profil réalisé de configuration sensiblement en C, et sont agencées mutuellement par paires de façon telle que les branches de leur profil soient disposées en vis-à-vis mutuel dans un plan vertical.

3. Dispositif selon la revendication 2, caractérisé par le fait que les branches de profil en vis-à-vis mutuel sont de hauteur identique, et forment les glissières de guidage (5a, 5b et 6a, 6b) extérieures et intérieures.

4. Dispositif selon les revendications 1 à 3, caractérisé par le fait que les surfaces latérales de deux, parmi les glissières de guidage (5a, 5b) en vis-à-vis, assurent le guidage roulant horizontal des pièces de roulement (17a) portant les pièces de coincement (17b).

5. Dispositif selon les revendications 1 à 3, caractérisé par le fait que la surface horizontale de la glissière inférieure de guidage (5b) constitue le guidage roulant vertical des pièces de roulement (17a).

6. Dispositif selon la revendication 3, caractérisé par le fait que la hauteur des glissières (5a, 5b) est plus grande que la hauteur des glissières voisines (6a, 6b).

7. Dispositif selon la revendication 1, dans lequel les chaînons de l'organe de traction (18) du premier système de transport (1, 2) consistent en des tourillons d'articulation (23) et en des maillons (24, 25) solidarisant frontalement ces derniers, et les tourillons d'articulation (23) sont équipés d'un galet respectif de roulement (27) à leurs extrémités libres, caractérisé par le fait que les galets de roulement (27) sont guidés, à chaque fois, entre des glissières extérieure et intérieure (5a, 6a et 5b, 6b).

8. Dispositif selon la revendication 7, caractérisé par le fait qu'au moins un tourillon d'articulation (23) de chaque chaînon est doté d'un galet d'appui (33), assurant l'appui vertical de l'organe de traction (18).

9. Dispositif selon la revendication 8, caractérisé par le fait que la surface horizontale (28) de la glissière de guidage (6b) constitue la surface de roulement des galets de support des chaînons.

10. Dispositif selon les revendications 1 et 2, caractérisé par le fait que les chaînons de l'organe de traction (38) des seconds systèmes de transport (3, 4) comprennent
- un corps de chaîne (36) réalisé sous la forme d'un profil en C
- deux axes (39) agencés avec parallélisme axial sur la face externe considérée des branches du profil du corps de chaîne (36), en vue de recevoir un galet respectif de roulement (40) occupant une position horizontale
- une attache intérieure respective (41), intégrée entre chaque galet de roulement (40) et la branche du profil
- une attache extérieure respective (42), solidarisant les extrémités libres de l'axe (39) du corps de chaîne (36)
- au moins un élément d'entraînement (37), présentant par exemple une denture (37a) et relié au corps de chaîne (36), mécaniquement ou par concordance de formes, et
- au moins un galet d'appui (44) portant verticalement chaque corps de chaîne (36).

11. Dispositif selon les revendications 1 et 10, caractérisé par le fait que les galets de roulement (40) sont guidés, à chaque fois, entre des glissières extérieure et intérieure (5a, 6a et 5b, 6b) des systèmes de transport (3, 4).

12. Dispositif pour l'entraînement et l'enfilement des pièces de roulement portant les pièces de coincement, qui sont guidées hors d'un premier système de transport entraîné séparément, jusque dans un second système de transport entraîné séparément, les vitesses de rotation en boucle des systèmes de transport étant mutuellement différentes, selon la revendication 1, caractérisé par le fait que les pièces de roulement mutuellement voisines sont reliées par l'intermédiaire d'au moins une attache d'entraînement (47), intégrée dans la pièce de roulement (17a) du côté de l'évidement (29) configuré en U, les attaches d'entraînement (47) étant munies de trous oblongs (49) en vue de recevoir les axes de roulement (17c).
